# EUROPEAN PATENT SPECIFICATION

(11) **EP 0 187 333 B1**
(45) Date of publication and mention of the grant of the patent: **10.02.1993**
(21) Application number: 85116200.8
(22) Date of filing: 18.12.1985
(51) Int. Cl.: C08G 18/66

(54) **Process for the production of polyurea and/or polyhydrazodicarbonamide dispersions and their further processing to polyurethanes.**
Verfahren zur Herstellung von Polyharnstoff-und/oder Polyhydrazodicarbonamid-Dispersionen und ihre Weiterverarbeitung zu Polyurethanen.
Procédé pour la préparation de dispersions de polyurées et/ou polyhydrazodicarbonamides et préparation de polyuréthanes à partir des dites dispersions.

(30) Priority: 08.01.1985 US 689689
(43) Date of publication of application: 16.07.1986
(73) Proprietor: MILES INC., Pittsburgh, PA 15219-2502 (US)
(72) Inventor: Keegan, Richard E., New Martinsville West Virginia 26155 (US); König, Klaus, Dr., D-5090 Leverkusen 1 (DE); Dietrich, Manfred, Dr., D-5090 Leverkusen (DE)
(74) Representative: Müller, Gerhard, Dr.

(56) References cited:
- DE-A- 3 125 402
- GB-A- 1 453 258
- US-A- 4 089 835

## Description

### BACKGROUND OF THE INVENTION

Stable dispersions for use in manufacturing polyurethanes are known in the art. One particular family of said dispersions which have met with substantial commercial success are those prepared by reacting an organic polyisocyanate with polyamines containing primary and/or secondary amino groups and/or hydrazines and/or hydrazides in the presence of a hydroxyl-group containing material. See, e.g. U.S. Patent 4,042,537 and 4,089,835. U.S. 4,089,835 discloses dispersions made from reaction of such compounds with an NCO/amin-ratio of 0.8 to 1.05. While these commercially available dispersions yield polyurethane foams having excellent physical properties, it would be desirable if even further improvements could be realized.

The present invention is therefore directed to the method of manufacture thereof, and their use in the manufacture of polyurethanes, especially polyurethane foams. The resultant foams are generally characterized by significantly improved physical properties. Foams characterized by improved elongation and/or improved tensile strength are readily obtained.

### DESCRIPTION OF THE INVENTION

The present invention is more particularly directed to a process for the in situ production of stable dispersions of polyureas and/or polyhydrazodicarbonamides in polyethers, polyesters, polyester amides, polycarbonates, or mixtures thereof by reacting
(a) organic polyisocyanates with
(b) (i) polyamines containing primary and/or secondary amino groups, (ii) hydrazines, (iii) hydrazides, or (iv) mixtures thereof in
(c) a hydroxyl group containing material,
wherein said components (a), (b), and (c) are continuously introduced into a flow mixer in such a quantity that the average residence time in the mixer is less than 10 minutes and the reaction product issuing from the flow mixer is subsequently collected in a receiver, which is characterized in that
1. said polyisocyanate (a) is a liquid reaction product of an organic di- and/or polyisocyanate and a compound containing at least 1 hydroxy group, said reaction product having an isocyanate group content of from about 5 to 45% by weight,
2. said liquid reaction product and said component (b) are reacted in an isocyanate to amine equivalent ratio of from 1.051:1 to below 1.15 : 1,
3. wherein at least 50% of the hydroxyl groups of the hydroxyl group containing material are secondary, and
4. wherein said dispersion has a solids content of from 20 to 40% by weight.

The present invention is also directed to the use of such dispersion in producing polyurethane, either in cellular or non-cellular form.

In preparing the liquid reaction product (a) substantially any di- and/or polyisocyanate may be used. Suitable isocyanates include aliphatic, cycloaliphatic, araliphatic, aromatic and heterocyclic polyisocyanates of the type described, for example, by W. Siefken in Justus Liebigs Annalen der Chemie, 562, pages 75 to 136. Specific examples include ethylene diisocyanate; 1,4-tetramethylene diisocyanate; 1,6-hexamethylene diisocyanate; 1,12-dodecane diisocyanate, cyclobutane-1,3-diisocyanate; cyclohexane-1,3- and 1,4-diisocyanate, and mixtures of these isomers; 1-isocyanato-3,3,5-trimethyl-5-isocyanato methyl cyclohexane (see, e.g. German Auslegeschrift No. 1,202,785 and U.S. Patent No. 3,401,190); 2,4- and 2,6-hexahydrotolylene diisocyanate and mixtures of these isomers; hexahydro-1,3- and/or 1,4-phenylene diisocyanate; perhydro-2,4'- and/or 4,4'-diphenyl methane diisocyanate; 1,3- and 1,4-phenylene diisocyanate; 2,4- and 2,6-tolylene diisocyanate and mixtures of these isomers; diphenyl methane-2,4'- and/or 4,4'-diisocyanate; naphthylene-1,5-diisocyanate; triphenyl methane-4,4',4''-triisocyanate; polyphenyl polymethylene polyisocyanates of the type which may be obtained by condensing aniline with formaldehyde, followed by phosgenation, and which are described, for example, in British Patent Nos. 878,430 and 848,671; m- and p-isocyanatophenyl sulphonyl isocyanates of the type described in U.S. Patent No. 3,454,606; perchlorinated aryl polyisocyanates of the type described, for example, in U.S. Patent No. 3,227,138; polyisocyanates containing carbodiimide groups of the type described in U.S. Patent No. 3,152,162; diisocyanates of the type described in U.S. Patent No. 3,492,330; polyisocyanates containing allophanate groups of the type described, for example, in British Patent No. 994,890, Belgian Patent No. 761,626 and published Dutch Patent Application No. 7,102,524, polyisocyanates containing isocyanurate groups of the type described, for example, in U.S. Patent No. 3,002,973, in German Patent Nos. 1,022,789; 1,222,067 and 1,027,394, and in German Offenlegungsschriften Nos. 1,929,034 and 2,004,048; polyisocyanates containing urea groups of the type described in German Patent No. 1,230,778; polyisocyanates containing biuret groups of the type described, for example, in German Patent No. 1,101,394; U.S. Patent Nos. 3,124,605 and 3,201,372 and in British Patent No. 889,050; polyisocyanates obtained by telomerization reactions of the type described, for example, in U.S. Patent No. 3,654,106; polyisocyanates containing ester groups of the type described, for example, in British Patent Nos. 965,474 and 1,072,956, in U.S. Patent No. 3,567,763 and in German Patent No. 1,231,688; reaction products of the above-mentioned isocyanates with acetals as described in German Patent No. 1,072,385; and polyisocyanates containing polymeric fatty acid radicals of the type described in U.S. Patent No. 3,455,883.

It is also possible to use the isocyanate-group-containing distillation residues accumulating in the production of isocyanates on a commercial scale, optionally in solution in one or more of the aforementioned polyisocyanates. It is also possible to use mixtures of the aforementioned polyisocyanates.

In general, it is particularly preferred to use readily available polyisocyanates, such as 2,4- and 2,6-tolylene diisocyanates add mixtures of these isomers ("TDI"); polyphenyl polymethylene polyisocyanates of the type obtained by condensing aniline with formaldehyde, followed by phosgenation ("crude MDI"); and, polyisocyanates containing carbodiimide groups, allophanate groups, isocyanurate groups; urea groups or biuret groups ("modified polyisocyanates"). TDI is presently the most preferred.

The di- and/or polyisocyanates are reacted with a compound containing at least one hydroxyl group, the resultant reaction product containing from about 5 to about 45 percent by weight isocyanate groups. The hydroxyl-group containing compounds are polyethers, polyesters, polyester amides, polycarbonates and mixtures thereof.

The polyethers are preferred and preferably contain from 1 to 8 and more preferably from 2 to 6 secondary and optionally primary hydroxyl groups. The polyethers preferably have molecular weights of from 200 to 16,000 and most preferably from 500 to 12,000. Polyethers of this type may be obtained in known manner by reacting starter compounds containing reactive hydrogen atoms with alkylene oxides, such as ethylene oxide, propylene oxide, butylene oxide, styrene oxide, tetrahydrofuran or epichlorohydrin, or with mixtures of these alkylene oxides.

Suitable starter compounds containing reactive hydrogen atoms include water, methanol, ethanol, ethylene glycol, 1,2- or 1,3-propylene glycol, 1,4- or 2,3-butylene glycol, 1,6-hexane diol, 1,8-octane diol, neopentyl glycol, 1,4-bis-hydroxymethyl cyclohexane, 2-methyl-1,3-propane diol, glycerol, trimethylolpropane, 1,2,6-hexane triol, 1,2,4-butane triol, trimethylolethane, pentaerythritol, mannitol, sorbitol, methylglycoside, cane sugar, phenol, isononylphenol, resorcinol, hydroquinone, 1,2,2- and 1,1,3-tris (hydroxyphenyl)-ethane, ammonia, methylamine, ethylene diamine, tetra- or hexamethylene diamine, diethylene triamine, ethanolamine, diethanolamine, triethanolamine, aniline, phenylene diamine, 2,4- and 2,6-diaminotoluene and polyphenyl-polymethylene-polyamines of the type obtained by condensing aniline with formaldehyde. In addition, resin-like materials of the phenol and resol type may also be used as starters. Polyethers modified with vinyl polymers, e.g., the compounds obtained by polymerizing styrene and acrylonitrile in the presence of polyethers (U.S. Patent Nos. 3,383,151, 3,304,273, 3,523,093 and 3,110,695 and German Patent Specification No. 1,142,536) and polybutadienes which contain OH-groups are also suitable.

The polyesters containing hydroxyl groups which generally have molecular weights of from 400 to 16,000 and preferably from 500 to 12,000, suitable for use in the instant invention include reaction products of polyhydric (preferably dihydric and, optionally, trihydric) alcohols with polybasic (preferably dibasic) carboxylic acids. Instead of using free polycarboxylic acids, it is also possible to use the corresponding polycarboxylic acid esters of lower alcohols or mixtures thereof for producing the polyesters. The polycarboxylic acids may be aliphatic, cycloaliphatic, aromatic and/or heterocyclic and may be substituted (for example by halogen atoms) and/or unsaturated. Examples of suitable polycarboxylic acids include succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimeric and trimeric fatty acids, such as oleic acid, optionally in admixture with monomeric fatty acids, terephthalic acid dimethyl ester and terephthalic acid-bis-glycol ester. Examples of suitable polyhydric alcohols include ethylene glycol, 1,2- and 1,3-propylene glycol, 1,4- and 2,3-butylene glycol, 1,6-hexane diol, 1,8-octane diol, neopentyl glycol, cyclohexane dimethanol (1,4-bis-hydroxymethyl cyclohexane), 2-methyl-1,3-propane diol, glycerol, trimethylol propane, 1,2,6-hexane triol, 1,2,4-butane triol, trimethylol ethane, triethylene glycol, tetraethylene glycol, polyethylene glycols, dipropylene glycol, polypropylene glycols, dibutylene glycol and polybutylene glycols. The polyesters may also contain terminal carboxyl groups. Polyesters of lactones, such as ε-caprolactam, or hydroxy carboxylic acids, such as ω-hydroxy caproic acid, may also be used.

Suitable polycarbonates containing hydroxyl groups are those known compounds which may be obtained, for example, by reacting diols, such as 1,3-propane diol, 1,4-butane diol and/or 1,6-hexane diol, diethylene glycol, triethylene glycol or tetraethylene glycol, with diaryl carbonates, such as, diphenyl carbonate, or phosgene.

The polyester amides include, for example, the predominantly linear condensates obtained from poly-basic saturated and unsaturated carboxylic acids or their anhydrides and polyhydric saturated and unsaturated amino alcohols, diamines, polyamines and mixtures thereof.

The molecular weight ranges for both the polycarbonates and polyester amides are generally from 400 to 16,000 and preferably from 500 to 12,000.

As noted above, the isocyanate and hydroxyl containing materials are reacted in such a ratio that the resultant product has an isocyanate group content of from about 5 to 45 percent by weight. The product is then reacted with primary and/or secondary amino groups, hydrazines, hydrazides and mixtures thereof in the presence of one or more hydroxyl group containing material.

Although in the reaction of the liquid reaction product (a) in the presence of the hydroxyl group-containing material, the NCO-groups react preferentially with the -NH and/or NH₂-groups, the OH-groups also play their part in the reaction. This reaction results in the formation of polyurea and/or polyhydrazo dicarbonamide chains which are chemically attached to molecules of the hydroxyl containing material. Molecules of this type presumably have a dispersing effect upon the resinous particles. The extent to which the OH-groups take part in the reaction is governed by the course of the reaction. If too many hydroxyl functional molecules react with the reaction product (a), highly viscous dispersions are obtained. If, on the other hand, the proportion of co-reacting hydroxyl functional molecules is too small, the dispersions formed are in danger of being unstable. By following the process of the instant invention, it is possible to control the NCO/OH-reaction to such a degree that finely divided dispersions with the low viscosity required are formed. Additionally, the dispersions are still so stable that they do not sediment even after prolonged storage and even after storage at elevated temperatures.

The dispersions of the present invention are prepared using the techniques described in U.S. Patents 4,042,537 and 4,089,835.

Suitable polyamines useful in the instant invention include: divalent and/or higher polyvalent, primary and/or secondary, aliphatic, araliphatic, cycloaliphatic or aromatic amines. Specific examples include ethylene diamine, 1,2- and 1,3-propylene diamine, tetramethylene diamine, hexamethylene diamine, dodecamethylene diamine, trimethyl diaminohexane, N,N'-dimethyl ethylene diamine, 2,2'-bis-aminopropyl methylamine, higher homologues of ethylene diamine, such as diethylene triamine, triethylene tetramine and tetraethylene pentamine, homologues of propylene diamine, such as dipropylene triamine, piperazine, N,N'-bis-aminoethyl-piperazine, triazine, 4-amino-benzylamine, 4-amino-phenylethylamine, 1-amino-3,3,5-trimethyl-5-aminomethyl cyclohexane, 4,4'-diaminodicyclohexylmethane and propane, 1,4-diaminocyclohexane, phenylene diamines, naphthylene diamines, condensates of aniline and formaldehyde tolylene diamines, bis-aminomethylbenzenes and the derivatives of the above-mentioned aromatic amines monoalkylated on one or both nitrogen atoms. The polyamines useable will generally have molecular weights of from about 60 to about 10,000 and preferably from 60 to 3000 with the molecular weight range of from 60 to 1000 being particularly preferred.

Suitable hydrazines include hydrazine itself and mono- or N,N'-disubstituted hydrazines, the substituents being, e.g., C₁-C₆-alkyl groups, cyclohexyl groups or phenyl groups. The hydrazines generally have a molecular weight of from 32 to 500. It is generally preferred to use hydrazine itself.

Suitable hydrazines and hydrazides useful in accordance with the instant invention include hydrazine, methyl hydrazine, ethyl hydrazine, hydrazine hydrate, propyl hydrazine, isopropyl hydrazine, n-butyl hydrazine, isobutyl hydrazine, tert.-butyl hydrazine, butenyl hydrazine, dodecyl hydrazine, phenyl hydrazine, tolyl hydrazine, benzyl hydrazine, 2-phenylethyl hydrazine, cyclohexyl hydrazine, cyclopentyl hydrazine, β-cyanoethyl hydrazine, 1,2-dimethyl hydrazine, 1,2-diethyl hydrazine, 1,2-diisobutyl hydrazine, 1-butyl-2-methyl hydrazine, hydrazobenzene, 1-benzyl-2-phenyl hydrazine, oxallyl dihydrazide, semicarbazide, carbohydrazide, 4-methyl semicarbazide, 4-phenyl semicarbazide, isophthalic acid dihydrazide, β-hydrazinopropionic acid hydrazide, thiosemicarbazide, thiocarbohydrazide, aminoguanidine, 1-amino-piperazine and 1,4-diaminopiperazine.

The hydrazides useable are generally the hydrazides of divalent or higher polyvalent carboxylic acid, such as carbonic acid, oxalic acid, malonic acid, succinic acid, adipic acid, sebacic acid, azelaic acid, maleic acid, fumaric acid, phthalic acid, isophthalic acid, and terephthalic acid; the esters of hydrazinomonocarboxylic acid with dihydric or higher polyhydric alcohols and phenols, such as ethane diol, 1,2-propane diol, 1,2-butane diol, 1,3-butane diol and 1,4-butane diol, hexane diol, diethylene glycol, triethylene glycol, tetraethylene glycol, dipropylene glycol, tripropylene glycol and hydroquinone; and the amides of hydrazinomonocarboxylic acid (semicarbazides) with, for example, the above-mentioned diamines and polyamines. The hydrazides generally have molecular weights of from 90 to 10,000, preferably from 90 to 3000 and, with particular preference, from 90 to 1000.

The above-mentioned amines and hydrazines are optionally used in the form of their standard commercial-grade aqueous solutions.

The invention enables isocyanates and amines, hydrazines or hydrazides with a functionality of more than two to be proportionately or exclusively used. The reaction of compounds of such relatively high functionality in hydroxyl group-containing materials does not result in the formation of solid, or at the least, very highly viscous reaction products. Rather the reaction results once again in the formation of finely divided dispersions.

The polyaddition products obtained by the process according to the invention, dispersed in the hydroxyl group-containing material, may also be modified by the proportionate use of monofunctional isocyanates, amines, hydrazine derivatives or ammonia. For example, the average molecular weight of the polyaddition products may be adjusted by incorporating monofunctional compounds of this type. In cases where alkanolamines with primary or secondary amino groups are used, it is possible to synthesize polyureas and polyurea polyhydrazo-dicarbonamides containing free hydroxyl groups. It is also possible to introduce other groups, such as ester groups, relatively long aliphatic radical, tertiary amino groups, and active double bonds, by utilizing correspondingly substituted monoamines or diamines and/or isocyanates.

According to the invention, the monofunctional compounds may generally be used in proportion of up to 40 mol % and more preferably in proportions of up to 25 mol % (based on total isocyanate, amine, hydrazine and hydrazide content).

Suitable monofunctional isocyanates include: alkyl isocyanates, such as methyl, ethyl, isopropyl, isobutyl, hexyl, lauryl and stearyl isocyanate; chlorohexyl isocyanate; cyclohexyl isocyanate; phenyl isocyanate; tolyl isocyanate, 4-chlorophenyl isocyanate, and diisopropyl phenyl isocyanate.

Examples of suitable monoamines include alkyl and dialkyl amines with C₁-C₁₈ alkyl groups, cylcoaliphatic amines, such as cyclohexyl amine and homologues thereof; aniline and N-alkyl anilines; aniline derivatives substituted on the benzene nucleus, alkanolamines, such as ethanolamine, diethanolamine, propanolamine, dipropanolamine, butanolamine and dibutanolamine; diamines with one tertiary and one primary or secondary amino groups, such as N,N-dimethyl ethylene diamine and N-methyl-piperazine. Suitable monofunctional hydrazine derivatives and hydrazides of monocarboxylic acids, hydrazine monocarboxylic acid esters of monofunctional alcohols or phenols, and semi-carbazides, such as methyl, ethyl, propyl, butyl, hexyl, dodecyl, stearyl, phenyl and cyclohexyl semicarbazide.

As noted above, it is also possible to include in the active hydrogen containing material relatively low molecular weight glycols and polyols, having molecular weights up to 400. Suitable low molecular weight polyols are the diols and triols generally known from polyurethane chemistry as chain extenders and crosslinkers, such as 1,2- and 1,3-propylene glycol, 1,4- and 2,3-butylene glycol, 1,6-hexane diol, 1,8-octane diol, neopentyl glycol, cyclohexane dimethanol, 2-methyl-1,3-propane diol, glycerol, trimethylol propane, 1,2,6-hexane triol, 1,2,4-butane triol or trimethylol ethane, but glycols with hydrophilic character, such as ethylene glycol, diethylene glycol, triethylene glycol and dipropylene glycol are preferred. In addition, however, it is also possible to use compounds, such as dibutylene glycol, thiodiglycol and castor oil, in component (3). Ester diols corresponding to one of the following general formulae are also useful:

HO-(CH₂)ₓ-CO-O-(CH₂)_{y}-OH and

HO-(CH₂)ₓ-O-CO-R-CO-O-(CH₂)ₓ-OH

wherein
- R: represents an alkylene or arylene radical having from 1 to 10 carbon atoms and preferably having from 2 to 6 carbon atoms,
- x=: from 2 to 6 and
- y=: from 23 to 5. Specific examples include δ-hydroxy butyl-E-hydroxy caproic acid ester, ω-hydroxy hexyl-γ -hydroxy butyric acid ester, adipic acid-bis-(β-hydroxy-ethyl)-ester and terephthalic acid-bis-(β -hydroxy-ethyl)-ester. Diol urethanes corresponding to the following general formula are also useful:

HO-(CH₂)ₓ-O-CO-NH-R'-NH-CO-O-(CH₂)ₓ-OH

wherein
- R': represents an alkylene, cycloalkylene or arylene radical having from 2 to 15 carbon atoms and preferably having from 2 to 6 carbon atoms, and
- x: is an integer of from 2 to 6. Examples include 1,6-hexamethylene-bis-(β-hydroxyethyl urethane) or 4,4'-diphenyl methane-bis-(β-hydroxybutyl urethane). Even diol ureas corresponding to the following general formula are useful: 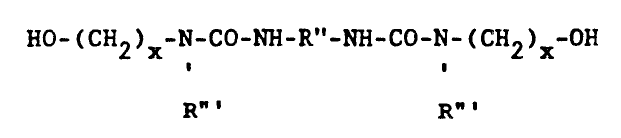
wherein
- R'': represents an alkylene, cycloalkylene or arylene radical having from 2 to 15 carbon atoms and preferably having from 2 to 9 carbon atoms.
- R''': represents H or CH₃ and
- x=: 2 or 3. Examples include 4,4'-diphenyl methane-bis-(β-hydroxyethyl urea) or the compound

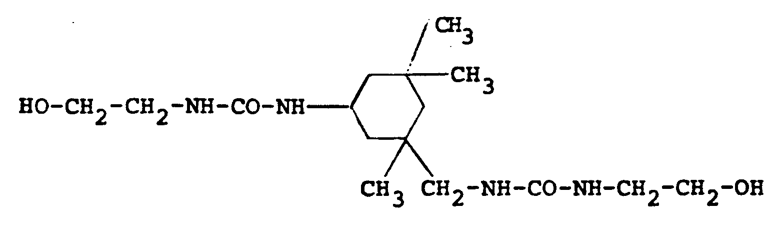

Particularly suitable low molecular weight dihydric and trihydric alcohols are those which, in admixture with the relatively high molecular weight polyethers, give a dispersant (component (3) in the process according to the present invention) which is liquid below 50°C. The viscosity of the reaction mixture in the through-flow mixers at the reaction temperature is generally below 2000 mP.s(cP), preferably below 1000 mPa.s(cP) and most preferably in the range of from 100 to 500 mPa.s(cP).

The molecular weight of the products formed in dispersion in hydroxyl containing material is determined by the quantitative ratio between polyamine, hydrazine or hydrazide on the one hand and the isocyanate content of the reaction product (a) an the other hand (and by the monofunctional compounds used, if any).

An NCO:NH ratio of from 1.051 to 1.15, is maintained.

The concentration of the polyaddition products in the hydroxyl group-containing material may vary from 20 to 40% by weight.

In general, the reaction components are introduced into a flow mixer of the type generally known in the art at room temperature. If desired, the hydroxyl containing material may be introduced at a slightly elevated temperature (for example 40 to 50°C) to reduce the viscosity for ease of pumping and more efficient mixing. The reaction temperature may rise to from 50 to 150°C under the effect of the shear forces generated in cases where a dynamic mixer is used and under the effect of the heat of the polyaddition reaction generated depending upon the quantity of resinous solids. In general, however, it is best to keep the temperature below 110°C (optionally by cooling the mixer), because otherwise any water which may be present evaporates and can give rise to disturbances as a result of bubble formation. In cases where hydrazine is used, it is important to ensure that the decomposition temperature of hydrazine is not exceeded.

The polyaddition reaction of polyisocyanates and polyamines, hydrazines or hydrazides can be carried out in higher-performance continuous flow mixers with average residence times of from about 1 second up to 10 minutes and preferably from 2 seconds to 3 minutes.

The homogenization or dispersion time 0 should only amount to at most 10% of the average residence time, in order to obtain thorough admixture of the components. It is possible, although not essential, to arrange two or even more flow mixers one behind the other. The times quoted above then apply logically to the mixer system as a whole.

Flow mixers are known and divided into two groups, namely static mixers with fixed fittings, and dynamic mixers with movable fittings operating on the rotor-stator principle. They may optionally be heated or cooled. In the case of static mixers, the mixing energy required is applied through pumps, whereas in the case of dynamic mixers a separate motor drives the rotor.

In every case, the dispersing effect and, hence the particle size in the dispersion is governed by the energy applied and the shear forces correspondingly generated.

Static mixers may be divided into the following groups:
(a) Mixers with simple fittings (see e.g., U.S. Patent No. 3,286,992, German Offenlegungsschrift No. 2,119,293 and U.S. Patent No. 3,704,006).
(b) Multi-channel mixers (for example, the AMK-Ross-ISG Mixers manufactured by Aachener Misch-und Knetmaschinen-Fabrik, West Germany).
(c) So-called packing mixers, for example, the static mixers manufactured by Sulzer AG (Winterthur, Switzerland) and the BKM-Mixers manufactured by Bayer AG (West Germany). (See e.g., U.S. Patent No. 3,785,620 and German Offenlegungsschrift No. 2,328,795 respectively).
(d) Further variants of static mixers are mixing nozzles, for example, those manufactured by the Lechler Company (Stuttgart, West Germany) or the mixing chambers in the HK-machines manufactured by the Hennecke Company (Birlinghofen, West Germany) into which the starting products are injected under high pressure (counter-current injection).

Dynamic mixers suitable for use in the process according to the invention include the flow mixers manufactured by the companies Ekato RMT (Schopfheim, West Germany), Lightnin (Neu-Isenburg, West Germany) and Hennecke (toothed stirrer) which, like the known impeller-type homogenizing machines, operates on the stator-rotor principle, but cannot be used to perform feed or delivery functions. The energy required for dispersion in general amounts to from 1 to more than 10kW per liter of mixer volume depending upon the required particle size, the type of mixer used and the viscosity of the starting materials.

In cases where anhydrous amines, hydrazines and hydrazides are used, there is no need for any further working-up on completion of the polyaddition reactions. However, in cases where aqueous amines (for example, aqueous ethylene diamine solution or hydrazine hydrate) are used, it is advisable in some cases to remove the water from the dispersion in vacuo.

In general, the process according to the invention is carried out by introducing the three components hydroxyl-group-containing material, NH-component and reaction product from separate supply vessels through metering pumps into the flow mixer in which they are thoroughly mixed and in which, at the same time, most of the polyaddition reaction takes place. However, it is also possible to combine the amine component with the hydroxyl-group-containing component before introduction into the flow mixer. The substantially reacted product is then introduced into a receiver in which it is optionally stirred to complete the reaction, optionally with heating to form 50° to 150°C. In cases where aqueous amines are used, the end products are, if desired, freed in vacuo from the water present in them.

Additives, such as activators, stabilizers, water, blowing agents, flameproofing agents and pigment pastes, may be added to the dispersions prepared by the process according to the invention either during or after the reaction.

The dispersions prepared by the process according to the invention may be processed, for example, into soft, semi-hard and hard polyurethane foams with improved properties, such as increased tensile strength and elongation. The dispersions are also suitable for the production of, for example, elastomers, coverings and coatings based on polyurethanes.

Other starting components suitable according to the invention for use in the production of the foams are aliphatic, cycloaliphatic, araliphatic, aromatic and heterocyclic polyisocyanates of the type previously described.

According to the invention, water and/or readily volatile organic substances are used as blowing agents. Organic blowing agents include acetone, ethyl acetote, halogen-substituted alkanes, such as methylene chloride, chloroform, ethylidene chloride, vinylidene chloride, monofluorotrichloromethane, chlorodifluoromethane, and dichlorodifluoromethane; butane, hexane, heptane, diethyl ether and the like. A blowing effect may also be obtained by adding compounds such as azo-compounds which decompose at temperatures above room temperature giving off gases (such as nitrogen). A suitable azo-compound is azoisobutyronitrile. Further examples of blowing agents and information on the use of blowing agents may be found in Kupststoff-Handbuch-Vol. VII, Vieweg and Hochtlen, Carl-Hanser-Verlag, Munich, 1966 pages 108 and 109, 453 to 455 and 507-510.

In many cases, catalysts are also used in producing the foams in accordance with the invention. Suitable known catalysts include tertiary amines, such as triethylamine, tributylamine, N-methyl morpholine, N-ethyl morpholine, N-coco-morpholine, N,N,N',N'-tetramethyl ethylene diamine, 1,4-diazabicyclo-(2,2,2)-octane, N-methyl-N'-dimethyl amino ethyl piperazine, N,N-dimethyl benzylamine, bis-(N,N-diethylaminoethyl)-adipate, N,N-diethyl benzylyamine, pentamethyl diethylene triamine, N,N'-dimethyl cyolohexylamine, N,N,N'-N-tetra methyl-1,3-butane diamine, N,N-dimethyl- -phenylethylamine, 1,2-dimethyl imidazole and 2-methylimidazole. Other suitable catalysts are known Mannich bases of secondary amines, such as dimethyl amine, and aldehydes, preferably formaldehyde, or ketones, such as acetone, methylethyl ketone, cyclohexanone, and phenols, such as phenol, nonyl phenol and bis-phenol.

Tertiary amines containing isocyanate-reactive hydrogen atoms may also be used as catalysts and include triethanolamine, triisapropanolamine, N,N-dimethyl ethanolamine, also their reaction products with alkylene oxides, such as propylene oxide and/or ethylene oxide.

Other suitable catalysts are sila-amines with carbon-silicon bonds of the type described, for example, in U.S. Patent No. 3,620,984. Specific examples include 2,2,4-trimethyl-2-silamorpholine and 1,3-diethylaminomethyl tetramethyl disiloxane.

It is also possible to use catalysts nitrogen-containing bases, such as tetraalkyl ammonium hydroxides; alkali metal hydroxides, such as sodium hydroxide, alkali metal phenolates, such as sodium phenolates, or alkali metal alcoholates, such as sodium methylate. Hexahydrotriazines may also be used as catalysts.

According to the invention, organometallic compounds and more especially organo tin compounds may also be used as catalysts.

Preferred organotin compounds include tin (II) salts of carboxylic acids, such as tin (II) acetate, tin (II) octoate, tin (II) ethyl hexoate and tin (II) laurate, and tin (IV) compounds such as dibutyl tin oxide, dibutyl tin dichloride, dibutyl tin diacetate , dibutyl tin dilaurate, dibutyl tin maleate or dioctyl tin diacetate. It is of course, possible to use any of the above-mentioned catalysts in the form of mixtures.

Further representatives of catalysts suitable for use in accordance with the invention and information on the way in which they work may be found in Kunststoff-Handbuch, Vol. VII, by Vieweg and Hochtlen, Carl-Hanser-Verlag, Munich, 1966 for example on pages 96 to 102.

The catalysts are generally used in a quantity of from 0.001 to 10% by weight, based on the quantity of the high molecular weight compound according to the invention.

According to the invention, it is also possible to use surface-active additives, such as emulsifiers and foam stabilizers. Examples of suitable emulsifiers include the sodium salts of castor oil sulphonates or salts of fatty acids with amines, such as diethylamine oleate or diethanolamine stearate. Alkali metal or ammonium salts of sulphonic acids, for example, of dodecyl benzene sulphonic acid or dinaphthyl methane disulphonic acid, or of fatty acids, such as ricinoleic acid or of polymeric fatty acids may also be used as surface-active additives.

Suitable foam stabilizers include polyether siloxanes, especially those which are water-soluble. The compounds are generally synthesized in such a way that a copolymer of ethylene oxide and propylene oxide is attached to a polydimethyl siloxane radical. Foam stabilizers of this type are described, for example, in U.S. Patent Nos. 2,834,748; 2,917,480 and 3,629,308.

According to the invention, it is also possible to use reaction retarders such as acid-reacting substances (e.g. hydrochloric acid or organic acid halides), cell regulators, such as paraffins, fatty alcohols or dimethyl polysiloxanes; pigments, dyes, flame-proofing agents, such as tris-chloroethyl phosphate, tricresyl phosphate or ammonium phosphate and polyphosphate; stabilizers against ageing and weathering, plasticizers, fungistatic and bacteriostatic compounds and fillers, such as barium sulphate, kieselguhr, carbon black or whiting.

Other examples of surface-active additives, foam stabilizers, cell regulators, reaction retarders, stabilizers, flameproofing agents, plasticizers, dyes, fillers, and fungistatic and bacteriostatic compounds, optionally used in accordance with the invention, and also details on the way additives of this type are used and the way in which they work may be found in Kunststoff-Handbuch, Vol. VII, Vieweg and Hochtlen, Carl-Hanser-Verlag, Munich, 1966 pages 103-113.

According to the invention, the reaction components may be reacted by the known one-stage process, by the prepolymer process or by the semi-prepolymer process, in many cases using machines, for example, those of the type described in U.S. Patent No. 2,764,565. Particulars of processing machines which may also be used in accordance with the invention may be found in Kunststoff-Handbuch, Vol. VII, Vieweg and Hochtlen, Carl-Hanser-Verlag, Munich 1966, pages 121 to 205.

According to the invention, the foams are often produced by foaming in molds. To this end, the reaction mixture is introduced into a mold. Suitable mold materials include metals (for example, aluminum) or plastics (for example, epoxide resin). In the mold, the foamable reaction mixture foams and forms the molding. In-mold foaming may also be carried out in such a way that the molding has a compact skin and a cellular core. According to the invention, it is possible in this connection to introduce into the mold such a quantity of foamable reaction mixtures that the foam formed just fills the mold. However, it is also possible to introduce into the mold more foamable reaction mixture than is required to fill the interior of the mold with foam. This technique is known as "over-charging" and is described, for example, in U.S. Patent Nos. 3,178,490 and 3,182,104.

In many cases "external release agents" such as silicone oils, are used during in-mold foaming. However, it is also possible to use so-called "internal release agents", optionally in admixture with external release agents, as known, for example, from German Offenlegungsschriften 2,121,670 and 2,307,589.

Cold-hardening foams may also be produced in accordance with the invention (cf. British Patent No. 1,162,517, German Offenlegungsschrift No. 2,153,086).

It is further possible to produce foams by block foaming or by the known double conveyor belt process.

The foams produced by the process according to the invention may be used, for example, as upholstery materials, mattresses, packaging materials, shock-absorbing motor-vehicle components, films for laminating purposes and as insulating materials. The highly flexible foams produced by the process according to the invention are particularly suitable for flame lamination with films, woven fabrics and knitted fabrics of natural and synthetic materials. Films of these foams may also be effectively welded by high-frequency and ultrasonic welding. The hard polyurethane foams produced are also suitable for the production of articles with an integral structure or for the production of sandwich elements. The foams may either be produced by the in-mold foaming process or may be obtained by fabrication from block-foamed materials. They may be processed by deep-drawing, stamping or hot-forming.

The invention is further illustrated, but is not intended to be limited by the following examples in which all parts and percentages are by weight unless otherwise specified.

### EXAMPLES

In the examples which follow, the following materials were used:
- Polyether (A): A glycerine-started polyether of propylene oxide and ethylene oxide with an OH number of 35 and a primary OH group content of approximately 80% based on the total OH content of the polyether.
- Polyether (B): A trimethylolpropane-started polyether of propylene oxide and ethylene oxide with an OH number of 45 and a primary OH content of less than 5% based on the total OH content of the polyether.
- Polyether (C): A glycerine and propylene glycol-started polyether of propylene oxide and ethylene oxide with an OH number of 56 and a primary OH content of less than 5% based an the total OH content of the polyether.
- Polyether (E): A linear polypropylene glycol terminally modified with ethylene oxide. (OH number 28; approximately 80% by weight of the OH groups are primary OH groups.)
- Polyether (F): A linear polypropylene glycol (OH number 56).
- Polyether (I): A trimethylol propane-started polyether of propylene oxide with an OH number of 660.
- TDI: Mixture of 80% of 2,4- and 20% of 2,6-toluene diisocyanate.

All prepolymers were prepared using the following method:
The polyether(s) and isocyanate(s) were charged to a reaction vessel at room temperature. A slight nitrogen pad was placed on the reactor and the contents were heated to 80°C. This temperature was maintained for several hours until the measured NCO content of the prepolymer corresponded to the theoretical NCO content. The material was cooled to room temperature and discharged from the reactor.

The following specific preparation of Prepolymer A serves as an example:
4,000 g (1 mole) of Polyether E and 6,090 g (35 moles) of TDI were charged to a reactor at room temperature. A slight nitrogen pad was placed on the reactor and the temperature increased to 80°C. This temperature was maintained for 2 hours. After this time, the NCO content was determined to be 28.1%. The product was cooled to room temperature and discharged from the reactor.

Several prepolymers were prepared using the procedure noted. The molar ratios and % by weight NCO were as indicated in Table I.

**TABLE I**

| Prepolymer | Composition (Mole Ratio) | % NCO |
|---|---|---|
| A | TDI-Polyether E (35/1) | 28.1 |
| B | TDI-Polyether F (20/1) | 29.1 |
| G | TDI-Polyether F (15/1) | 25.5 |
| I | TDI-Polyether F (30/1) | 33.7 |
| M | TDI-Polyether F-Polyether I (25/1/1) | 27.6 |

### Example 1

2,600 g/minute of Polyether A and 243 g/minute of hydrazine hydrate were separately pumped into a static mixer (diameter: 12.5 mm; length: 152 mm; number of elements: 6) while 1,344 g/minute of Polyether A and 834 g/minute of TDI were synchronously pumped through a second, identical static mixer. The mixtures leaving the two static mixers were brought together in a toothed stirrer (chamber volume 500 ml; 5,000 rpm). The resulting dispersion was delivered to a post reactor where it was stirred for 30 minutes at 80-100°C and subsequently dewatered in vacuo. A stable, white, finely divided dispersion having a solids content of 20%, an OH number of 28, and a viscosity of 3,500 mPas @ 25°C was obtained.

### Examples 8 and 18-29

The procedure was the same as in Example 1 except that a variety of NCO-terminated prepolymers were substituted for the toluene diisocyanate, a variety of base polyols having different structures was used, and isocyanate/amino equivalent ratio and solids contents were also varied. The values of each of these parameters for each example are shown in Table II.

**TABLE II**

| Example | Base Polyether | Prepolymer | NCO/Amine Ratio | % Solids | Visc. @25°C mPa.s |
|---|---|---|---|---|---|
| 1 (Comp.) | A | 100% TDI | 1.00 | 20 | 3500 |
| 8 | C | G | 1.20 | 20 | 3600 |
| 10 (Comp.) | C | G | 1.00 | 20 | 3700 |
| 18 (Comp.) | B | M | 1.00 | 30 | >200,000 |
| 19 | B | M | 1.10 | 30 | 7200 |
| 20 (Comp.) | B | M | 1.15 | 30 | 7050 |
| 21 (Comp.) | B | M | 1.25 | 30 | 11600 |
| 22 (Comp.) | B | B | 1.00 | 25 | 9400 |
| 23 (Comp.) | B | B | 1.15 | 30 | 7730 |
| 24 (Comp.) | C | I | 1.05 | 30 | 6540 |
| 25 | C | I | 1.10 | 30 | 4770 |
| 26 (Comp.) | C | I | 1.15 | 30 | 25250 |
| 27 (Comp.) | C | I | 1.20 | 30 | 66500 |
| 28 (Comp.) | C | I | 1.04 | 20 | 1890 |
| 29 | C | I | 1.08 | 20 | 1470 |

### Examples 30, 37 and 39

The experimental polyols were evaluated using the formulations listed in the following data below. The amount of TDI used in the formulations varied depending on the water level and OH No. of the polyol, but the isocyanate index was kept constant at 110.

| Component | PBW | PBW |
|---|---|---|
| Polyol | 100 | 100 |
| Water | 2.5 | 4.0 |
| C-7^{a} | ca.0.35 (varies) | ca. 0.50 (varies) |
| P-70^{b} | 0.3 | 0.3 |
| L-6202^{c} | 1.0 | 1.0 |
| TDI | (110 Index) | (110 Index) |

| | | |
|---|---|---|
| ^{a} 25% stannous octoate in dioctylphthalate, Witco Chemical Co. | | |
| ^{b} Polycat 70, a tertiary amine for Abbott Laboratories | | |
| ^{c} Dimethylpolysiloxane polyalkyleneoxide copolymer stabilizer, Union Carbide Corp. | | |

The polyols used in Examples 30, 37 and 39 correspond to the polyols produced in Examples 1, 8 and 10 respectively. The properties of the resultant foam were as indicated in Table III.

**TABLE III**

| FOAM PROPERTIES | | | |
|---|---|---|---|
| Examples | Density kg/m³ | Tensile Strength KPa | Elongation % |
| 30 | 32.0 | 150 | 80 |
| 37 | 24.2 | 180 | 170 |
| 39 | 23.4 | 170 | 185 |

## Claims

1. Process for the in situ production of stable dispersions of polyureas and/or polyhydrazodicarbonamides in polyethers, polyesters, polyester amides, polycarbonates, or mixtures thereof by reacting
(a) organic polyisocyanates with
(b) (i) polyamines containing primary and/or secondary amino groups, (ii) hydrazines, (iii) hydrazides, or (iv) mixtures thereof in
(c) a hydroxyl group containing material,
wherein said components (a), (b) and (c) are continuously introduced into a flow mixer in such a quantity that the average residence time in the mixer is less than 10 minutes and the reaction product issuing from the flow mixer is subsequently collected in a receiver, which is characterized in that
1. said polyisocyanate (a) is a liquid reaction product of an organic di- and/or polyisocyanate and a compound containing at least 1 hydroxy group, said reaction product having an isocyanate group content of from about 5 to 45% by weight,
2. said liquid reaction product and said component (b) are reacted in an isocyanate to amine equivalent ratio of from 1.051 : 1 to below 1.15 : 1,
3. wherein at least 50% of the hydroxyl groups of the hydroxyl group containing material are secondary, and
4. wherein said dispersion has a solids content of from 20 to 40% by weight.

2. Process for manufacturing polyurethanes wherein in a first step a dispersion is prepared according to the process of claim 1.

## Patentansprüche

1. Verfahren zur in situ-Herstellung stabiler Dispersionen von Polyharnstoffen und/oder Polyhydrazodicarbonamiden in Polyethern, Polyestern, Polyesteramiden, Polycarbonaten oder Mischungen davon, wobei man
(a) organische Polyisocyanate mit
(b) (i) primäre und/oder sekundäre Aminogruppen enthaltenden Polyaminen, (ii) Hydrazinen, (iii) Hydraziden oder (iv) Mischungen davon in
(c) einem Hydroxylgruppen enthaltenden Material zur Reaktion bringt,
wobei die genannten Komponenten (a), (b) und (c) kontinuierlich in einen Druchflußmischer in einer solchen Menge, daß die Durchschnittsverweilzeit in dem Mischer weniger als 10 Minuten beträgt, eingeleitet und das aus dem Durchflußmischer austretende Reaktionsprodukt anschließend in einem Aufnahmebehälter gesammelt werden, wobei das Verfahren dadurch **gekennzeichnet** ist, daß
1. das genannte Polyisocyanat (a) ein flüssiges Reaktionsprodukt eines organischen Di- und/oder Polyisocyanats und einer Verbindung mit mindestens einer Hydroxygruppe ist, wobei das genannte Reaktionsprodukt einen Isocyanatgruppengehalt von ca. 5 bis 45 Gew.% aufweist,
2. das genannte flüssige Reaktionsprodukt und die genannte Komponente (b) in einem Isocyanat- zu Aminäquivalentverhältnis von 051:1 bis unterhalb 1,15:1 umgesetzt werden,
3. mindestens 50 % der Hydroxylgruppen des Hydroxylgruppen enthaltenden Materials sekundäre Hydroxylgruppen sind und
4. die genannte Dispersion einen Feststoffgehalt von 20 bis 40 Gew.% aufweist.

2. Verfahren zur Herstellung von Polyurethanen, worin in einer ersten Stufe eine Dispersion gemäß des Verfahrens von Anspruch 1 hergestellt wird.

## Revendications

1. Procédé pour la préparation in situ de dispersions stables de polyurées et/ou de polyhydrazodicarbonamide dans des polyéthers, des polyesters, des polyesteramides, des polycarbonates ou des mélanges de ces derniers en faisant réagir
(a) des polyisocyanates organiques avec
(b) (i) des polyamines contenant des groupes amino primaires et/ou secondaires, (ii) des hydrazines, (iii) des hydrazides ou (iv) des mélanges de ces derniers, dans
(c) une matière contenant un groupe hydroxyle,
procédé dans lequel on introduit en continu lesdits composants (a), (b) et (c) dans un mélangeur continu dans une quantité telle que le temps de séjour moyen dans le mélangeur est inférieur à 10 minutes, le produit réactionnel sortant du mélangeur continu étant ensuite recueilli dans un dispositif de réception, ledit procédé étant caractérisé en ce que
1. ledit polyisocyanate (a) est un produit réactionnel liquide d'un di- et/ou polyisocyanate organique et d'un composé contenant au moins un groupe hydroxyle, ledit produit réactionnel ayant une teneur en groupe isocyanate d'environ 5 à 45% en poids,
2. on fait réagir ledit produit réactionnel liquide et ledit composant (b) dans un rapport d'équivalents isocyanate/amine de 1,051:1 à moins de 1,15:1,
3. dans lequel au moins 50% des groupes hydroxyle de la matière contenant des groupes hydroxyle sont du type secondaire, et
4. dans lequel ladite dispersion possède une teneur en produits solides de 20 à 40% en poids.

2. Procédé pour la fabrication de polyuréthannes, dans lequel, dans une première étape, on prépare une dispersion conformément au procédé de la revendication 1.
